(19) Europäisches Patentamt
European Patent Office
Office européen des brevets

(11) **EP 3 602 486 B1**

(12) **FASCICULE DE BREVET EUROPEEN**

(45) Date de publication et mention
de la délivrance du brevet:
**28.04.2021 Bulletin 2021/17**

(21) Numéro de dépôt: **18714325.0**

(22) Date de dépôt: **16.03.2018**

(51) Int Cl.:
*G06T 7/00* *(2017.01)*    *G06T 7/73* *(2017.01)*

(86) Numéro de dépôt international:
**PCT/FR2018/050635**

(87) Numéro de publication internationale:
**WO 2018/172670 (27.09.2018 Gazette 2018/39)**

(54) **CONTROLE NON DESTRUCTIF DE PIECES AERONAUTIQUES PAR UN SYSTEME DE RADIOGRAPHIE**

ZERSTÖRUNGSFREIE UNTERSUCHUNG VON LUFTFAHRTTEILEN DURCH EIN RÖNTGENSYSTEM

NON-DESTRUCTIVE EXAMINATION OF AERONAUTICAL PARTS BY AN X-RAY SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2017 FR 1752283**

(43) Date de publication de la demande:
**05.02.2020 Bulletin 2020/06**

(73) Titulaire: **Safran**
**75015 Paris (FR)**

(72) Inventeurs:
• **BOUSSAID, Haithem**
**77550 Moissy-Cramayel (FR)**
• **PARRA, Estelle**
**77550 Moissy-Cramayel (FR)**

(74) Mandataire: **Brevalex**
**95, rue d'Amsterdam**
**75378 Paris Cedex 8 (FR)**

(56) Documents cités:
**US-A1- 2011 200 268    US-B1- 6 658 089**

• **PIOTR BANIUKIEWICZ ET AL: "Automatic Detection and Identification of Image Quality Indicators in Radiograms", STUDIES IN APPLIED ELECTROMAGNETICS AND MECHANICS / ELECTROMAGNETIC NONDESTRUCTIVE EVALUATION (XIV), AMSTERDAM [U.A.] : IOS PRESS, 2011, NL, PAGE(S) 157 - 163 , 1 janvier 2011 (2011-01-01), XP009501924, ISBN: 978-1-60750-749-9 Extrait de l'Internet: URL:http://ebooks.iospress.nl/volumearticl e/22938 [extrait le 2017-11-28]**
• **R. SIKORA ET AL: "INTELLIGENT SYSTEM FOR RADIOGRAM ANALYSIS", AIP CONFERENCE PROCEEDINGS, 1 janvier 2011 (2011-01-01), pages 525-532, XP055429821, NEW YORK, US ISSN: 0094-243X, DOI: 10.1063/1.3591896**

**EP 3 602 486 B1**

**Description**

**DOMAINE TECHNIQUE**

L'invention concerne le contrôle non destructif de pièces aéronautiques par un système de radiographie. Un tel système doit être vérifié périodiquement pour garantir ses performances.

La vérification d'un système de radiographie comporte la réalisation de mesures de qualité sur des images radiographiques de pièces de référence normalisées appelées indicateurs de qualité d'image.

**ÉTAT DE LA TECHNIQUE ANTÉRIEURE**

Le fonctionnement d'un système de radiographie utilisé pour le contrôle non destructif de pièces aéronautiques est vérifié périodiquement, par exemple une fois par mois. Pour cela, un opérateur place une pièce de référence dans la cabine du système d'acquisition à rayons X. La pièce de référence, dite aussi cale, est un indicateur de qualité d'image qui répond par exemple à la norme ASTM E1025. Le système de radiographie produit une image radiographique de la cale.

De manière connue, l'opérateur doit effectuer une sélection manuelle pour définir les pixels de l'image concernés par la mesure de qualité d'image qui dépendent de la reconnaissance de la pièce de référence dans l'image radiographique.

Les valeurs de niveaux de gris des pixels sélectionnés sont ensuite analysées pour déduire une mesure de qualité d'image. La mesure de qualité d'image repose donc sur une action d'un opérateur et n'est donc pas parfaitement reproductible.

La mesure de qualité d'image est évaluée au regard du vieillissement ou de la détérioration du système radiographique. Cette évaluation a pour résultat une décision quant à l'aptitude du système radiographique à être utilisé pour fournir des images radiographiques de pièces à des fins de contrôle non destructif de la qualité de ces pièces. Il est donc important de rendre reproductible la vérification du système radiographique, ce qui n'est pas le cas avec les systèmes connus en raison de l'intervention de l'opérateur.

Un exemple de vérification automatique est divulgué dans l'article "Automatic Détection and Identification of Image Quality Indicators in Radiograms", Piotr Baniukiewicz et al., Electromagnetic Nondestructive Evaluation (XIV), 2011, pages 157 - 163.

**EXPOSÉ DE L'INVENTION**

L'invention vise à résoudre les problèmes de la technique antérieure en fournissant un procédé de contrôle non destructif de pièces aéronautiques mettant en œuvre un système d'acquisition d'images radiographiques des pièces aéronautiques, le procédé comportant la vérification du système d'acquisition d'images radiographiques des pièces aéronautiques, la vérification comportant des étapes de :

- Acquisition d'une image radiographique d'une pièce de référence connue comportant des structures prédéfinies,
- Reconnaissance des structures prédéfinies de la pièce de référence connue dans l'image radiographique acquise,
- Mesure de qualité d'image en fonction du résultat de l'étape de reconnaissance,

Caractérisé en ce que la reconnaissance des structures prédéfinies de la pièce de référence connue dans l'image radiographique acquise comporte des étapes de :

- Exploitation d'informations extraites de l'image acquise, pour produire des premières informations de structures, et
- Combinaison des premières informations de structures avec des informations représentant une connaissance a priori des structures, par modélisation par une chaîne de Markov, pour produire des secondes informations de structures.

Grâce à l'invention, les mesures de qualité d'image sont reproductibles et par conséquent sont plus fiables que selon la technique antérieure. En effet, il n'y a pas d'action d'un opérateur pour sélectionner des pixels servant à la mesure de qualité d'image.

Selon une caractéristique préférée, les structures prédéfinies de la pièce de référence connue comportent au moins un trou et l'exploitation d'informations extraites de l'image acquise comporte l'application d'un détecteur de blob aux données représentant l'image acquise.

Selon une caractéristique préférée, les structures prédéfinies de la pièce de référence connue comportent plusieurs trous, et les informations représentant la connaissance a priori des structures comportent les distances entre les trous.

Selon une caractéristique préférée, les structures prédéfinies de la pièce de référence connue comportent un contour de la pièce de référence connue et l'exploitation d'informations extraites de l'image acquise comporte l'application d'un détecteur de Canny aux données représentant l'image acquise.

Selon une caractéristique préférée, l'exploitation d'informations extraites de l'image acquise comporte en outre l'application d'une transformation de Hough au résultat de l'application du détecteur de Canny.

Selon une caractéristique préférée, les informations représentant la connaissance a priori des structures comportent des relations géométriques entre des parties du contour de la pièce de référence connue.

Selon une caractéristique préférée, la combinaison des premières informations de structures avec des informations représentant une connaissance a priori des structures comporte une maximisation d'un score dépendant des informations représentant une connaissance a priori des structures.

L'invention concerne aussi un dispositif de contrôle non destructif de pièces aéronautiques mettant en œuvre un système d'acquisition d'images radiographiques des pièces aéronautiques, le dispositif comportant des moyens de vérification du système d'acquisition d'images radiographiques des pièces aéronautiques, les moyens de vérification comportant :

- des moyens de reconnaissance de structures prédéfinies d'une pièce de référence connue dans une image radiographique acquise par le système d'acquisition d'images radiographiques,
- des moyens de mesure de qualité d'image en fonction du résultat de l'étape de reconnaissance,

Caractérisé en ce que les moyens de reconnaissance des structures prédéfinies de la pièce de référence connue dans l'image radiographique acquise comportent :

- des moyens d'exploitation d'informations extraites de l'image acquise, pour produire des premières informations de structures, et
- des moyens de combinaison des premières informations de structures avec des informations représentant une connaissance a priori des structures, par modélisation par une chaîne de Markov, pour produire des secondes informations de structures.

Le dispositif présente des avantages analogues à ceux précédemment présentés.

Dans un mode particulier de réalisation, les étapes du procédé selon l'invention sont mises en œuvre par des instructions de programme d'ordinateur.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

## BRÈVE DESCRIPTION DES DESSINS

D'autres caractéristiques et avantages apparaîtront à la lecture de la description suivante d'un mode de réalisation préféré, donné à titre d'exemple non limitatif, décrit en référence aux figures dans lesquelles :

La figure 1 représente un procédé de contrôle non destructif de pièces aéronautiques par un système d'acquisition d'images radiographiques des pièces aéronautiques, selon un mode de réalisation de la présente invention,
La figure 2 représente un exemple d'indicateur de qualité d'image,
La figure 3 représente une modélisation d'un problème de détection de trois trous de l'indicateur de qualité d'image, par une chaîne de Markov, selon un mode de réalisation de la présente invention,
La figure 4 représente un mode de réalisation du dispositif de contrôle non destructif de pièces aéronautiques par un système d'acquisition d'images radiographiques des pièces aéronautiques, selon un mode de réalisation de la présente invention.

## EXPOSÉ DÉTAILLÉ DE MODES DE RÉALISATION PARTICULIERS

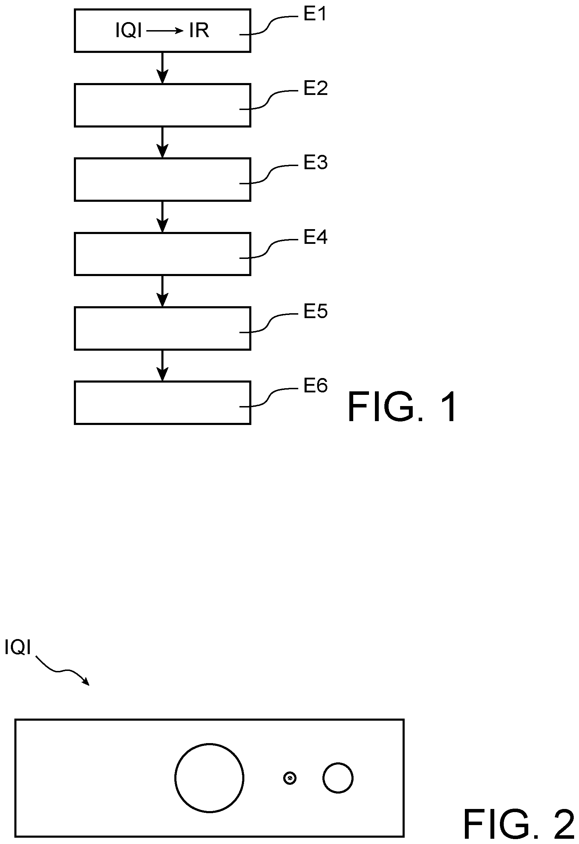

Selon un mode de réalisation préféré, représenté à la **figure 1,** le procédé de contrôle non destructif de pièces aéronautiques par un système d'acquisition d'images radiographiques des pièces aéronautiques comporte des étapes E1 à E6.

Le procédé de contrôle non destructif de pièces aéronautiques comporte classiquement la mise en œuvre d'un système d'acquisition d'images radiographiques des pièces aéronautiques. On s'intéresse ici uniquement à la vérification du système d'acquisition d'images radiographiques des pièces aéronautiques. Les autres aspects du procédé de contrôle non destructif ne seront pas décrits.

L'étape E1 est l'acquisition d'une image radiographique IR d'une pièce de référence connue qui est un indicateur de qualité d'image IQI. La **figure 2** représente un tel indicateur, sous la forme d'une cale de section rectangulaire comportant trois trous cylindriques de rayons différents. Cet indicateur de qualité d'image est normalisé dans la norme ASTM E1025. Cet indicateur de qualité d'image est caractérisé par les dimensions de ses côtés, la position et le diamètre de ses trous et les distances entre les centres des trous, avec une marge de tolérance par rapport à la norme. Ces caractéristiques constituent des structures prédéfinies de la pièce de référence connue. Bien entendu, d'autres indicateurs de qualité d'image avec d'autres caractéristiques géométriques sont utilisables dans le cadre de l'invention.

L'image radiographique IR de l'indicateur de qualité d'image IQI est formée de manière classique et la prise d'image proprement dite ne sera pas décrite ici.

L'étape E2 est une exploitation des données de l'image radiographique IR pour détecter les trois trous dans l'image ou dans une zone d'intérêt de celle-ci. Les trois trous sont détectés l'un après l'autre. La détection d'un trou est une détection d'un cercle de rayon r dans l'image radiographique IR et est réalisée par application d'un détecteur de blob aux données représentant l'image radiographique. Il s'agit d'un filtre Laplacien de Gaussienne qui est une convolution de l'image avec un noyau qui est la dérivée seconde d'une gaussienne. Le filtre dispose d'un seul paramètre qui est l'écart-type $\sigma$ de la gaussienne. Ce paramètre est considéré aussi comme le facteur d'échelle du filtre. Le noyau du filtre est une fonction à deux variables x et y et s'écrit :

$$G(x, y, \sigma) = (x^2 + y^2 - 2.\sigma^2).e^{-(x^2+y^2)/2.\sigma^2}$$

Où x et y représentent des coordonnées dans un espace à deux dimensions.

Le paramètre $\sigma$ du filtre Laplacien de gaussienne dépend du rayon r du cercle à détecter selon la formule :

$$\sigma = r/\sqrt{2}$$

La réponse du filtre Laplacien de gaussienne est maximale quand les zéros du Laplacien sont alignés avec le cercle de rayon r.

En pratique, le rayon r de cercle à détecter n'est pas connu. Pour détecter un cercle de rayon inconnu dans l'image, le filtre Laplacien de gaussienne est appliqué plusieurs fois en faisant varier le paramètre $\sigma$ et la réponse maximale du filtre donne le rayon r du trou. Cependant La réponse du filtre diminue quand l'écart-type $\sigma$ augmente. Pour conserver la même réponse (invariante par échelle), le filtre est multiplié par $\sigma^2$, puisque le Laplacien est la dérivée seconde d'une Gaussienne.

Le détecteur de blob permet de déterminer pour chaque pixel de l'image traitée les probabilités qu'il soit le centre de chacun des trois trous.

En effet, la réponse du détecteur de blob par rapport à l'image radiographique initiale est une nouvelle image de même dimension que l'image initiale. Pour un trou donné de rayon donné, la valeur de chaque pixel dans cette nouvelle image exprime la probabilité que ce pixel soit le centre du trou en question. Pour avoir la position du centre du trou, il suffit de chercher la position du pixel qui a la plus grande réponse du filtre.

L'étape E2 a pour résultat trois cartes de probabilité, chacune étant relative à un trou, de même dimension de l'image. Dans chacune de ces cartes la valeur d'un pixel exprime sa probabilité d'être le centre du trou en question. En cherchant le maximum de chaque carte, on trouve le centre de chacun des trois trous.

L'étape suivante E3 est une combinaison du résultat de l'étape E2 avec des informations représentant une connaissance a priori de l'indicateur de qualité d'image IQI, de manière à rendre plus robuste le résultat de l'étape E2.

La connaissance a priori de l'indicateur de qualité d'image est un ensemble d'informations sur la configuration géométrique de l'indicateur de qualité d'image. Cet ensemble d'informations comporte notamment les distances et l'alignement entre les centres des trois trous, avec une marge de tolérance définie dans la norme ASTM E1025.

Deux centres respectifs de deux trous donnés, de position respective $x_1$ et $x_2$, ont une distance nominale $\overline{d}$ et une marge de tolérance $\sigma$ de la distance réelle par rapport à la distance nominale, la distance $\overline{d}$ et la marge $\sigma$ étant spécifiées dans la norme ASTM E1025. La déviation de la distance réelle entre les deux centres par rapport à la distance nominale est mesurée par la fonction de forme gaussienne suivante :

$$\Psi_{1,2}(x_1, x_2) = \exp(\frac{(|x_1 - x_2| - \overline{d})^2}{\sigma}$$

Si la valeur de cette fonction est nulle, alors cela signifie que la distance réelle entre les deux centres des deux trous considérés est égale à $\overline{d}$. Plus la valeur de cette fonction est grande, plus la distance entre les deux centres des deux trous considérés est différente de la valeur nominale définie par la norme ASTM E1025.

Le résultat de l'étape E2 et la connaissance a priori des distances entre les centres des trois trous et de leur alignement sont combinés par une chaîne de Markov.

Pour cela, on considère trois trous définis par leur centre respectif $x_1$, $x_2$ et $x_3$ et un vecteur aléatoire X = {$x_1$, $x_2$, $x_3$} qui représente une configuration de la disposition des trois trous.

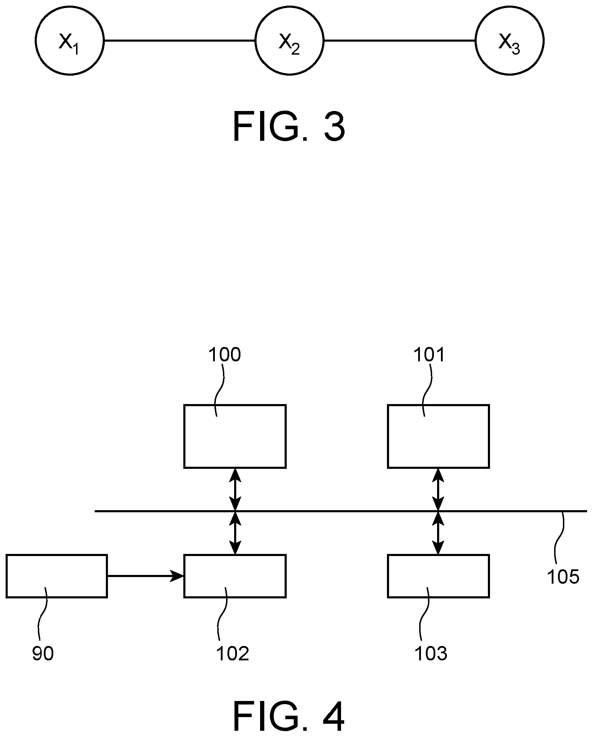

La **figure 3** représente une chaîne de Markov, dans laquelle les nœuds représentent les centres des trous à détecter et les arêtes entre les nœuds représentent la contrainte de distance entre les centres des trous.

Le but est de trouver la réalisation du vecteur X qui maximise la probabilité qu'il représente les centres des trois trous.

Pour cela, le théorème de Bayes permet d'exprimer la probabilité a posteriori du vecteur X connaissant l'image notée I :

$$P(X|I) = P(I|X)P(X)$$

Où P(X) représente la probabilité a priori du vecteur X et $P(I|X)$ représente la probabilité a posteriori de I connaissant X.

On utilise ensuite le fait que le vecteur X est exprimé par une chaîne de Markov :

$$P(X|I) = P(I|x_1)P(I|x_2)P(I|x_3)P(x_1, x_2)P(x_2, x_3)$$

Chacune des probabilités de l'expression précédente est modélisée par une fonction de potentiel respective. Ces fonctions n'étant pas forcément comprises entre 0 et 1, une constante de normalisation Z est appliquée. L'expression précédente devient ainsi :

$$P(X|I) = \frac{1}{Z}\Phi_1(I|x_1)\Phi_2(I|x_2)\Phi_3(I|x_3)\Psi_{1,2}(x_1, x_2)\Psi_{2,3}(x_2, x_3)$$

Dans cette expression, les fonctions $\Phi_1$, $\Phi_2$, $\Phi_3$ sont les réponses respectives pour chaque trou du filtrage, correspondant à un rayon du trou (étape E1). La fonction $\psi_{1,2}$ a été présentée plus haut et la fonction $\psi_{2,3}$ prend en compte la distance nominale entre les centres $x_2$ et $x_3$ et la direction des centres $x_1$ et $x_2$. Cette fonction est :

$$\Psi_{2,3} = \exp(\frac{(|h_2 - h_3| - \overline{h}_1)^2}{\sigma_1} + \frac{(|v_2 - v_3| - \overline{v}_1)^2}{\sigma_2})$$

Où ($h_2$, $v_2$) et ($h_3$, $v_3$) sont les coordonnées des centres $x_2$ et $x_3$, $\sigma_1$ et $\sigma_2$ sont des marges de tolérance et ($\overline{h}_1$, $\overline{v}_1$) est un vecteur dont la norme est la distance nominale entre les centre $x_2$ et $x_3$.

Pour maximiser la probabilité que le vecteur X représente les centres des trois trous, un score égal à log($P(X|I)$) est défini, sur la base de la position des centres des trous et de la distance et de l'alignement de trous. La maximisation de ce score fournit la position des centres des trous.

La maximisation du score est réalisée par un optimiseur basé sur la programmation dynamique. Cet optimiseur a la garantie de converger vers l'optimum global et ne nécessite pas d'initialisation. La programmation dynamique se base sur l'utilisation de la structure du problème pour sa décomposition en sous problèmes plus faciles à résoudre. La maximisation du score est réalisée de manière récursive. Un sous-problème est la recherche de la position du centre de l'un des trous. Dans l'exemple décrit, il y a donc trois sous-problèmes.

Chaque sous-problème est une maximisation d'un score « partiel » en fonction de la position du centre de l'un des trous. La solution d'un premier sous-problème est utilisée dans la résolution d'un second sous-problème, dont la résolution est elle-même utilisée dans la résolution du troisième sous-problème. Le résultat final est la résolution du problème, à savoir la position des centres des trois trous qui maximise le score défini par la chaîne de Markov.

Le résultat de l'étape E3 est une position précise des centres des trois trous dans l'image radiographique.

Le même mécanisme est appliqué pour détecter d'autres caractéristiques de l'indicateur de qualité d'image. L'étape E3 est suivie de l'étape E4 qui est une exploitation des données de l'image radiographique IR pour la détection du contour de l'indicateur de qualité d'image IQI dans l'image radiographique IR.

La détection du contour de l'indicateur de qualité d'image est la détection d'un rectangle de dimensions connues dans l'image radiographique.

Un détecteur de Canny est appliqué à l'image pour en détecter les principaux contours saillants.

Il est à noter que le filtre de Canny utilisé n'est pas nécessairement optimisé. Le filtrage de Canny comporte ainsi un filtrage gaussien dont l'écart-type est choisi égal à 1% de la largeur de l'indicateur de qualité d'image. Le filtrage de Canny comporte aussi un seuillage à hystérésis des contours. Les deux seuils sont choisis pour ne garder qu'un pourcentage maximal prédéfini des pixels de l'image considérés comme appartenant au contour.

Le résultat du filtrage de Canny est une image binaire dont les deux valeurs possibles de pixels sont attribuées d'une part aux pixels appartenant au contour et d'autre part aux pixels n'appartenant pas au contour.

Une transformation de Hough est appliquée à l'image binaire, de manière à former un accumulateur de Hough.

L'espace de Hough est un espace à deux dimensions où chaque droite est représentée par ses coordonnées $(\rho, \theta)$, où $\rho$ représente la distance de la droite au centre de l'image, et $\theta$ l'angle que fait une perpendiculaire à cette droite avec l'axe des abscisses de l'image.

Chaque pixel non nul de l'image binaire, c'est-à-dire appartenant au contour de l'indicateur de qualité d'image, vote pour l'ensemble de droites passant par ce point. Le résultat est une accumulation de votes sur chaque coordonnée de l'espace de Hough.

L'indicateur de qualité d'image forme un rectangle dans l'image binaire, donc quatre segments de droites parallèles deux à deux et perpendiculaires deux à deux. Ces quatre segments de droites sont représentés par quatre points dans l'espace de Hough. Les règles de correspondance entre image binaire et espace de Hough sont les suivantes. Deux droites parallèles sont représentées par des points de même abscisse dans l'espace de Hough. L'écart des ordonnées de deux points de l'espace de Hough représentant des droites parallèles est la distance entre ces droites. Deux droites perpendiculaires sont représentées par des points d'abscisses différentes de $\pi/2$ dans l'espace de Hough.

Les valeurs maximales de votes forment des sommets sur l'accumulateur de Hough et représentent les droites les plus longues détectées dans l'image binaire. Ces sommets forment les droites candidates pour former le rectangle de contour de l'indicateur de qualité d'image.

Si deux sommets ont la même abscisse, cela signifie que les deux droites représentées par ces deux sommets sont parallèles. Si deux sommets sur l'accumulateur ont une différence d'abscisse en valeur absolue de 90°, cela veut dire que les droites représentées par ces deux sommets sont perpendiculaires.

En pratique, le rectangle recherché dans l'image ne respecte pas forcément à la lettre ces contraintes. Ceci est dû d'une part à l'espace discret (échantillonnage) de l'espace de Hough et d'autre part à la souplesse autorisée par rapport aux propriétés géométriques de l'indicateur de qualité d'image. Il convient alors de tenir compte d'une certaine tolérance vis-à-vis de ces contraintes. Les quatre points recherchés sur l'accumulateur doivent avoir la même abscisse -à une tolérance près- deux à deux et les deux premiers points doivent avoir une différence de 90° -à une tolérance près- par rapport aux deux derniers.

Plus précisément, il s'agit de chercher quatre points $\{X_1, X_2, X_3, X_4\}$ sur l'accumulateur de Hough. Chaque point $X_i$ est représenté par ses coordonnées $(\rho_i, \theta_i)$ dans l'espace de Hough. Pour que ces points représentent un rectangle, il faut que :

$$\theta_1 = \theta_2$$

$$\theta_3 = \theta_4$$

$$\left|\theta_2 - \theta_3\right| = \pi / 2$$

L'étape E4 est suivie de l'étape E5 à laquelle le résultat de l'étape E4 est combiné avec des informations représentant une connaissance a priori de l'indicateur de qualité d'image, de manière à rendre plus robuste le résultat de l'étape E4.

Les contraintes ci-dessus sont vérifiées pour n'importe quel rectangle qui peut être détecté dans l'image. La recherche est ici limitée au rectangle qui englobe l'indicateur de qualité d'image. La largeur W et la longueur L de ce rectangle sont connues à l'avance à une tolérance près. On retrouve ces valeurs sur l'accumulateur de Hough. La largeur W de l'indicateur de qualité d'image est la valeur absolue de la différence des ordonnées $\rho_1$ et $\rho_2$ des deux premiers points qui représentent le rectangle sur l'accumulateur de Hough. La longueur L de l'indicateur de qualité d'image est la valeur absolue de la différence des ordonnées $\rho_3$ et $\rho_4$ des deux derniers points. Ceci se traduit par les équations suivantes :

$$\left|\rho_1 - \rho_2\right| = W$$

$$\left|\rho_3 - \rho_4\right| = L$$

Pour résoudre ces équations, le problème de recherche de quatre points sur l'accumulateur de Hough est modélisé par une chaîne de Markov. La chaîne comporte quatre nœuds qui sont les quatre points recherchés. Les liaisons entre les nœuds représentent les contraintes géométriques sur les coordonnées des points.

Le problème de recherche de quatre points sur l'accumulateur de Hough est alors résolu par la maximisation d'un score :

$$S(X_1, X_2, X_3, X_4) = \sum_{i=1}^{4} U(X_i) + \sum_{i=1}^{3} P_{i,i+1}(X_i, X_{i+1})$$

La fonction à une variable $U(X_i)$ est l'accumulateur de Hough. La recherche des points qui ont des scores maximaux sur l'accumulateur de Hough garantit que les points représentent des droites détectées par le détecteur de Canny.

Les fonctions à deux variables correspondent aux contraintes géométriques entre les quatre points recherchés. Ces fonctions représentent une pénalité qui augmente en s'éloignant d'un déplacement nominal entre les deux variables de la fonction. Plus précisément, on a :

$$P_{1,2}(X_1, X_2) = -\frac{(\left|\theta_1 - \theta_2\right|)^2}{\sigma_1} - \frac{(\left|\rho_1 - \rho_2\right| - W)^2}{\sigma_2}$$

Où $X_1$ et $X_2$ sont les points sur l'accumulateur de Hough qui représentent les deux droites du rectangle qui sont parallèles et dont la distance entre les deux est égale à W. La fonction vaut zéro pour chaque paire de points qui vérifie cette propriété et devient de plus en plus négative plus les points s'éloignent de cette configuration.

$$P_{2,3}(X_2, X_3) = -\frac{(\left|\theta_2 - \theta_3\right| - \pi/2)^2}{\sigma_3},$$

Dans la fonction $X_3$ est le point sur l'accumulateur de Hough qui représente la droite du rectangle qui est perpendiculaire à la droite du rectangle représentée par le point $X_2$.

La dernière fonction s'écrit :

$$P_{3,4}(X_3, X_4) = -\frac{(\left|\theta_3 - \theta_4\right|)^2}{\sigma_3} - \frac{(\left|\rho_3 - \rho_4\right| - L)^2}{\sigma_4}$$

Où $X_3$ et $X_4$ sont les points sur l'accumulateur de Hough qui représentent les deux droites du rectangle qui sont parallèles et dont la distance entre les deux est égale à L.

Dans chacune des trois fonctions précédentes, les termes $\sigma_1$, $\sigma_2$, $\sigma_3$ et $\sigma_4$ sont des tolérances dans la recherche du rectangle de largeur W et de longueur L.

Un algorithme d'inférence/optimisation est ensuite appliqué pour maximiser la fonction de score, c'est-à-dire trouver les valeurs $\left\{X_1^*, X_2^*, X_3^*, X_4^*\right\}$ telles que :

$$\left\{X_1^*, X_2^*, X_3^*, X_4^*\right\} = \arg\max_{X_1, X_2, X_3, X_4} S(X_1, X_2, X_3, X_4)$$

Ce problème se présente comme un champ de Markov discret dont la structure est une chaine, et est résolu par l'algorithme de programmation dynamique. Cet algorithme fournit en sortie les cordonnées des quatre points qui maximisent (maximum global) la fonction de score.

Les quatre points fournissent les équations polaires des quatre droites correspondantes dans l'image de l'indicateur de qualité d'image. Les coordonnées des quatre sommets du rectangle sont ensuite calculées par calcul des intersections entre les quatre droites.

Le résultat de l'étape E5 est donc le contour de l'indicateur de qualité d'image dans l'image radiographique.

L'étape suivante E6 est une mesure de qualité d'image effectuée sur l'image radiographique à partir de la reconnaissance de l'indicateur de qualité d'image dans l'image. La mesure de qualité d'image est classique en soi et ne sera pas décrite ici.

La **figure 4** représente un mode de réalisation particulier de dispositif de contrôle non destructif de pièces aéronautiques par un système d'acquisition d'images radiographiques des pièces aéronautiques, selon un mode de réalisation de l'invention.

Le dispositif comporte un système 90 d'acquisition d'images radiographiques des pièces aéronautiques connu en soi, qui n'est pas décrit ici. Il comporte en outre un moyen de vérification du système d'acquisition d'images radiographiques des pièces aéronautiques. Ce moyen a la structure générale d'un ordinateur. Il comporte notamment un processeur 100 exécutant un programme d'ordinateur mettant en œuvre le procédé selon l'invention, une mémoire 101, une interface d'entrée 102 et une interface de sortie 103.

Ces différents éléments sont classiquement reliés par un bus 105.

L'interface d'entrée 102 est reliée au système d'acquisition d'image radiographique 90 et est destinée à recevoir les données représentant l'image radiographique de l'indicateur de qualité d'image à traiter.

Le processeur 100 exécute les traitements précédemment exposés. Ces traitements sont réalisés sous la forme d'instructions de code du programme d'ordinateur qui sont mémorisées par la mémoire 101 avant d'être exécutées par le processeur 100.

L'interface de sortie 103 délivre les données qui représentent le résultat de la mesure de qualité d'image.

**Revendications**

1. Procédé de contrôle non destructif de pièces aéronautiques mettant en œuvre un système d'acquisition d'images radiographiques des pièces aéronautiques, le procédé comportant la vérification du système d'acquisition d'images radiographiques des pièces aéronautiques, la vérification comportant des étapes de :

   - Acquisition (E1) d'une image radiographique (IR) d'une pièce de référence connue (IQI) comportant des structures prédéfinies,
   - Reconnaissance (E2, E3, E4, E5) des structures prédéfinies de la pièce de référence connue dans l'image radiographique acquise,
   - Mesure (E6) de qualité d'image en fonction du résultat de l'étape de reconnaissance,

   **Caractérisé en ce que** la reconnaissance des structures prédéfinies de la pièce de référence connue dans l'image radiographique acquise comporte des étapes de :

   - Exploitation d'informations extraites de l'image acquise (E2, E4), pour produire des premières informations de structures, et
   - Combinaison des premières informations de structures avec des informations représentant une connaissance a priori des structures (E3, E5), par modélisation par une chaîne de Markov, pour produire des secondes informations de structures.

**2.** Procédé de contrôle non destructif selon la revendication 1, les structures prédéfinies de la pièce de référence connue comportant au moins un trou, **caractérisé en ce que** l'exploitation d'informations extraites de l'image acquise (E2) comporte l'application d'un détecteur de blob aux données représentant l'image acquise.

**3.** Procédé de contrôle non destructif selon la revendication 2, les structures prédéfinies de la pièce de référence connue comportant plusieurs trous, **caractérisé en ce que** les informations représentant la connaissance a priori des structures comportent les distances entre les trous.

**4.** Procédé de contrôle non destructif selon la revendication 1, les structures prédéfinies de la pièce de référence connue comportant un contour de la pièce de référence connue, **caractérisé en ce que** l'exploitation d'informations extraites de l'image acquise comporte l'application d'un détecteur de Canny aux données représentant l'image acquise.

**5.** Procédé de contrôle non destructif selon la revendication 4, **caractérisé en ce que** l'exploitation d'informations extraites de l'image acquise comporte en outre l'application d'une transformation de Hough au résultat de l'application du détecteur de Canny.

**6.** Procédé de contrôle non destructif selon la revendication 4 ou 5, **caractérisé en ce que** les informations représentant la connaissance a priori des structures comportent des relations géométriques entre des parties du contour de la pièce de référence connue.

**7.** Procédé de contrôle non destructif selon l'une quelconque des revendications 1 à 6, **caractérisé en ce que** la combinaison des premières informations de structures avec des informations représentant une connaissance a priori des structures comporte une maximisation d'un score dépendant des informations représentant une connaissance a priori des structures.

**8.** Dispositif de contrôle non destructif de pièces aéronautiques mettant en œuvre un système d'acquisition d'images radiographiques des pièces aéronautiques, le dispositif comportant des moyens de vérification du système d'acquisition d'images radiographiques des pièces aéronautiques, les moyens de vérification comportant :

- des moyens de reconnaissance de structures prédéfinies d'une pièce de référence connue dans une image radiographique acquise par le système d'acquisition d'images radiographiques,
- des moyens de mesure de qualité d'image en fonction du résultat de l'étape de reconnaissance,

**Caractérisé en ce que** les moyens de reconnaissance des structures prédéfinies de la pièce de référence connue dans l'image radiographique acquise comportent :

- des moyens d'exploitation d'informations extraites de l'image acquise, pour produire des premières informations de structures, et
- des moyens de combinaison des premières informations de structures avec des informations représentant une connaissance a priori des structures, par modélisation par une chaîne de Markov, pour produire des secondes informations de structures.

**9.** Programme d'ordinateur comportant des instructions pour l'exécution des étapes du procédé selon l'une quelconque des revendications 1 à 7 lorsque ledit programme est exécuté par un ordinateur.

**10.** Support d'enregistrement lisible par un ordinateur sur lequel est enregistré un programme d'ordinateur comprenant des instructions pour l'exécution des étapes du procédé selon l'une quelconque des revendications 1 à 7.

**Patentansprüche**

**1.** Zerstörungsfreies Untersuchungsverfahren von Luftfahrtteilen, das ein System zur Erfassung von Röntgenbildern von Luftfahrtteilen einsetzt, wobei das Verfahren die Überprüfung des Systems zur Erfassung von Röntgenbildern von Luftfahrtteilen umfasst, wobei die Überprüfung folgende Schritte aufweist:

- Erfassung (E1) eines Röntgenbildes (IR) eines bekannten Referenzteils (IQI), das vordefinierte Strukturen aufweist,
- Erkennung (E2, E3, E4, E5) von vordefinierten Strukturen des bekannten Referenzteils in dem erfassten Röntgenbild,
- Messung (E6) der Bildqualität in Abhängigkeit des Ergebnisses des Erkennungsschrittes,

**dadurch gekennzeichnet, dass** die Erkennung der vordefinierten Strukturen des bekannten Referenzteils in dem erfassten Röntgenbild folgende Schritte aufweist:

- Auswertung von aus dem erfassten Bild ausgelesenen Informationen (E2, E4), um erste Informationen über Strukturen zu erstellen, und
- Kombination der ersten Informationen über Strukturen mit Informationen, die ein A-priori-Wissen der Strukturen (E3, E5) darstellen, durch Modellierung durch eine Markov-Kette, um zweite Informationen über Strukturen zu erstellen.

2. Zerstörungsfreies Untersuchungsverfahren nach Anspruch 1, wobei die vordefinierten Strukturen des bekannten Referenzteils mindestens ein Loch aufweisen, **dadurch gekennzeichnet, dass** die Auswertung von aus dem erfassten Bild ausgelesenen Informationen (E2) die Anwendung eines Blob-Detektors auf die das erfasste Bild darstellenden Daten umfasst.

3. Zerstörungsfreies Untersuchungsverfahren nach Anspruch 2, wobei die vordefinierten Strukturen des bekannten Referenzteils mehrere Löcher aufweisen,
**dadurch gekennzeichnet, dass** die Informationen, die das A-priori-Wissen der Strukturen darstellen, die Abstände zwischen den Löchern aufweisen.

4. Zerstörungsfreies Untersuchungsverfahren nach Anspruch 1, wobei die vordefinierten Strukturen des bekannten Referenzteils eine Kontur des bekannten Referenzteils aufweisen, **dadurch gekennzeichnet, dass** die Auswertung von aus dem erfassten Bild ausgelesenen Informationen die Anwendung eines Canny-Detektors auf die das erfasste Bild darstellenden Daten umfasst.

5. Zerstörungsfreies Untersuchungsverfahren nach Anspruch 4, **dadurch gekennzeichnet, dass** die Auswertung von aus dem erfassten Bild ausgelesenen Informationen außerdem die Anwendung einer Hough-Transformation auf das Ergebnis der Anwendung des Canny-Detektors umfasst.

6. Zerstörungsfreies Untersuchungsverfahren nach Anspruch 4 oder 5, **dadurch gekennzeichnet, dass** die das A-priori-Wissen der Strukturen darstellenden Informationen geometrische Beziehungen zwischen Teilen der Kontur des bekannten Referenzteils aufweisen.

7. Zerstörungsfreies Untersuchungsverfahren nach einem der Ansprüche 1 bis 6, **dadurch gekennzeichnet, dass** die Kombination der ersten Informationen über Strukturen mit Informationen, die ein A-priori-Wissen der Strukturen darstellen, eine Maximierung eines Ergebnisses umfasst, das von Informationen, die ein A-priori-Wissen der Strukturen darstellen, abhängig ist.

8. Zerstörungsfreie Untersuchungsvorrichtung von Luftfahrtteilen, die ein System zur Erfassung von Röntgenbildern von Luftfahrtteilen einsetzt, wobei die Vorrichtung Mittel zur Überprüfung des Erfassungssystems von Röntgenbildern von Luftfahrtteilen aufweist, wobei die Mittel zur Überprüfung Folgendes aufweisen:

- Mittel zur Erkennung von vordefinierten Strukturen eines bekannten Referenzteils in einem Röntgenbild, das durch das System zur Erfassung von Röntgenbildern erfasst wird,
- Mittel zum Messen der Bildqualität in Abhängigkeit des Ergebnisses des Erkennungsschrittes,

**dadurch gekennzeichnet, dass** die Mittel zur Erkennung der vordefinierten Strukturen des bekannten Referenzteils in dem erfassten Röntgenbild Folgendes aufweisen:

- Mittel zur Auswertung von aus dem erfassten Bild ausgelesenen Informationen, um erste Informationen über Strukturen zu erstellen, und
- Mittel zur Kombination der ersten Informationen über Strukturen mit Informationen, die ein A-priori-Wissen der Strukturen darstellen, durch Modellierung durch eine Markov-Kette, um zweite Informationen über Strukturen zu erstellen.

9. Computerprogramm mit Anweisungen zur Durchführung der Schritte des Verfahrens nach einem der Ansprüche 1 bis 7, wenn das Programm durch einen Computer ausgeführt wird.

10. Aufzeichnungsmedium, das von einem Computer lesbar ist, auf welchem ein Computerprogramm gespeichert ist, das Anweisungen zur Durchführung der Schritte des Verfahrens nach einem der Ansprüche 1 bis 7 enthält.

**Claims**

1. Method for non-destructive examination of aeronautical parts implementing an acquisition system of X-ray images of aeronautical parts, the method comprising the verification of the acquisition system of X-ray images of aeronautical parts, the verification comprising steps of:

   - Acquiring (E1) an X-ray image (IR) of a known reference part (IQI) comprising predefined structures,
   - Recognising (E2, E3, E4, E5) the predefined structures of the known reference part in the acquired X-ray image,
   - Measuring (E6) the image quality according to the result of the step of recognition,

   **Characterised in that** the recognition of the predefined structures of the known reference part in the acquired X-ray image comprises steps of:

   - Using information extracted from the acquired image (E2, E4), to produce first structure information, and
   - Combining the first structure information with information representing an a priori knowledge of the structures (E3, E5), by modelling by a Markov chain, in order to produce second structure information.

2. Method for non-destructive examination according to claim 1, the predefined structures of the known reference part comprising at least one hole, **characterised in that** the use of information extracted from the acquired image (E2) comprises the application of a blob detector to the data representing the acquired image.

3. Method for non-destructive examination according to claim 2, the predefined structures of the known reference part comprising several holes, **characterised in that** the information representing the a priori knowledge of the structures comprises the distances between the holes.

4. Method for non-destructive examination according to claim 1, the predefined structures of the known reference part comprising a contour of known reference part, **characterised in that** the use of information extracted from the acquired image comprises the application of a Canny detector to the data representing the acquired image.

5. Method for non-destructive examination according to claim 4, **characterised in that** the use of information extracted from the acquired image further comprises the application of a Hough transformation to the result of the application of the Canny detector.

6. Method for non-destructive examination according to claim 4 or 5, **characterised in that** the information representing the a priori knowledge of the structures comprises geometrical relations between portions of the contour of the known reference part.

7. Method for non-destructive examination according to any of claims 1 to 6, **characterised in that** the combining of the first structure information with information representing an a priori knowledge of the structures comprises a maximising of a score that depends on the information representing an a priori knowledge of the structures.

8. Device for non-destructive examination of aeronautical parts implementing an acquisition system of X-ray images of aeronautical parts, the device comprising means for verifying the acquisition system of X-ray images of aeronautical parts, the means for verifying comprising:

   - means for recognising predefined structures of a known reference part in an X-ray image acquired by the acquisition system of X-ray images,
   - means for measuring the image quality according to the result of the step of recognition,

**Characterised in that** the means for recognising predefined structures of the known reference part in the acquired X-ray image comprising:

- means for using information extracted from the acquired image, to produce first structure information, and
- means for combining the first structure information with information representing an a priori knowledge of the structures, by modelling by a Markov chain, in order to produce second structure information.

9. Computer program comprising instructions for the execution of the steps of the method according to any of claims 1 to 7 when said program is executed by a computer.

10. Recording support that can be read by a computer whereon is recorded a computer program comprising instructions for the execution of the steps of the method according to any of claims 1 to 7.

FIG. 1

FIG. 2

FIG. 3

FIG. 4

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PIOTR BANIUKIEWICZ et al.** Automatic Détection and Identification of Image Quality Indicators in Radiograms. *Electromagnetic Nondestructive Evaluation (XIV),* 2011, 157-163